# EUROPÄISCHE PATENTANMELDUNG

(11) **EP 4 814 465 A1**
(43) Veröffentlichungstag der Anmeldung: **30.09.2026**
(21) Anmeldenummer: 26164010.6
(22) Anmeldetag: 11.03.2026
(51) Int. Cl.: G01L 19/14, G01L 19/00, G01L 19/06

(54) **DRUCKSENSOR**

(30) Priorität: 24.03.2025 EP 25165560
(71) Anmelder: Kistler Holding AG, 8408 Winterthur (CH)
(72) Erfinder: Heer, Christian, 8409 Winterthur (CH)

(57) **Zusammenfassung**

Die Erfindung betrifft einen Drucksensor zur Messung des Drucks eines Mediums in einem Druckraum, welcher Druckraum eine Wandung und eine Messbohrung aufweist, welcher Druck in der Messbohrung anliegt; mit einem Montagekörper, einem vorderen Gehäuseteil und einer Messeinheit; welcher Montagekörper eingerichtet ist, den Drucksensor an der Wandung des Druckraums zu montieren; welches vordere Gehäuseteil bezüglich einer Längsrichtung des Drucksensors an einem druckraumnahen Ende des Drucksensors angeordnet ist; welches vordere Gehäuseteil bezüglich einer Längsrichtung des Drucksensors einen druckraumnahen Frontbereich und eine druckraumferne Membraneinheit aufweist; wobei im montierten Zustand des Drucksensors der Frontbereich druckdicht an der Wandung anliegt und die Membraneinheit in die Messbohrung ragt; welche Membraneinheit eingerichtet ist, den zu messenden Druck aufzunehmen und zur Messeinheit abzuleiten; und welche Messeinheit eingerichtet ist, unter der Wirkung des Drucks mindestens ein Messsignal zu erzeugen; wobei das vordere Gehäuseteil mindestens ein Gelenkelement aufweist; wobei das Gelenkelement bezüglich der Längsrichtung des Drucksensors zwischen dem Frontbereich und der Membraneinheit angeordnet ist; und wobei eine Dicke des Gelenkelements um mindestens einen Faktor 2 kleiner als eine Dicke des Frontbereichs ist.

## Beschreibung

### Technisches Gebiet

Die Erfindung betrifft einen Drucksensor nach dem Oberbegriff des unabhängigen Anspruchs.

### Stand der Technik

Die Schrift WO2023/217465A1 offenbart einen Sensor zur Messung des Drucks eines Mediums. Dieser Drucksensor weist eine Membran, ein Gehäuse und eine Messeinheit auf. Die Membran und das Gehäuse umschliessen einen Hohlraum, die Messeinheit ist im Hohlraum angeordnet. Die Membran ist eingerichtet, sich unter der Wirkung des Drucks zu verformen. Die Membran und die Messeinheit sind in Wirkverbindung. Die Messeinheit ist eingerichtet, für aus der Verformung der Membran resultierende Kraft ein Messsignal zu erzeugen.

Der Druck des Mediums kann bis zu 2500 bar betragen. Ein so hoher Druck wird üblicherweise in einem Druckraum erzielt. Zur Messung des Drucks wird der Drucksensor in einer Messbohrung in einer Wandung des Druckraums montiert. Dazu weist der Drucksensor der WO2023/217465A1 einen Montagekörper auf. Der Montagekörper ist eingerichtet, den Drucksensor an der Wandung des Druckraums zu montieren. Im montierten Zustand des Drucksensors ragt die Membran in die Messbohrung. Die Membran steht somit im direkten Kontakt mit dem Medium.

Um zu vermeiden, dass das unter hohem Druck stehende Medium durch die Messbohrung aus dem Druckraum entweicht, was ein Sicherheitsrisiko für Menschen ausserhalb des Druckraums darstellt, ist auch das Gehäuse des Drucksensors der WO2023/217465A1 so eingerichtet, dass es in die Messbohrung ragt und die Messbohrung durch Anliegen an der Wandung des Druckraums gegen ein Entweichen des Mediums nach ausserhalb des Druckraums abdichtet.

Bei der Montage des Drucksensors an der Wandung treten mechanische Spannungen auf, welche vom Montagekörper über das Gehäuse auf die Messeinheit wirken und sich bei der Messung des Drucks mit der aus der Verformung der Membran resultierenden Kraft überlagern und so das Messsignal verfälschen können.

Es ist daher die Aufgabe der vorliegenden Erfindung, den Einfluss auf die Messeinheit von aus der Montage des Drucksensors der WO2023/217465A1 stammenden mechanischen Spannungen auf konstruktiv einfache und kostengünstige Weise zu minimieren.

### Darstellung der Erfindung

Diese Aufgabe wird durch die Merkmale des unabhängigen Anspruchs gelöst.

Die Erfindung betrifft einen Drucksensor zur Messung des Drucks eines Mediums in einem Druckraum, welcher Druckraum eine Wandung und eine Messbohrung aufweist, welcher Druck in der Messbohrung anliegt; mit einem Montagekörper, einem vorderen Gehäuseteil und einer Messeinheit; welcher Montagekörper eingerichtet ist, den Drucksensor an der Wandung des Druckraums zu montieren; welches vordere Gehäuseteil bezüglich einer Längsrichtung des Drucksensors einen druckraumnahen Frontbereich und eine druckraumferne Membraneinheit aufweist; wobei im montierten Zustand des Drucksensors der Frontbereich druckdicht an der Wandung anliegt und die Membraneinheit in die Messbohrung ragt; welche Membraneinheit eingerichtet ist, den zu messenden Druck aufzunehmen und zur Messeinheit abzuleiten; und welche Messeinheit eingerichtet ist, unter der Wirkung des Drucks mindestens ein Messsignal zu erzeugen; wobei das vordere Gehäuseteil mindestens ein Gelenkelement aufweist; wobei das Gelenkelement bezüglich der Längsrichtung des Drucksensors zwischen dem Frontbereich und der Membraneinheit angeordnet ist; und wobei eine Dicke des Gelenkelements um mindestens einen Faktor 2 kleiner als eine Dicke des Frontbereichs ist.

Das erfindungsgemäss Gelenkelement im vorderen Gehäuseteil ermöglicht eine gezielte Beeinflussung der von der Montage des Drucksensors an der Wandung des Druckraums stammenden mechanischen Spannungen, welche mechanische Spannungen über die druckdichte Anlage des Drucksensors an der Wandung in das vordere Gehäuseteil gelangen. Aufgrund der im Vergleich zum Frontbereich kleineren Dicke des Gelenkelements wird eine Steifigkeit des vorderen Gehäuseteils lokal vermindert.

Die Steifigkeit ist der mechanische Widerstand des vorderen Gehäuseteils gegen eine elastische Verformung. Die Steifigkeit hängt vom Material des vorderen Gehäuseteils, der Verarbeitung vom Material des vorderen Gehäuseteils und der Geometrie des vorderen Gehäuseteils ab.

Somit lässt sich die Steifigkeit des vorderen Gehäuseteils über die Dicke des Gelenkelements so einrichten, dass die mechanischen Spannungen das Gelenkelement gezielt elastisch verformen und sich dabei weitgehend kompensieren. Die mechanischen Spannungen können dadurch nur stark abgeschwächt über die Membraneinheit auf die Messeinheit wirken und so das Messignal nicht verfälschen. Im Sinne der Erfindung hat das Adjektiv "weitgehend" die Bedeutung von grösser/gleich 90 %.

Vorteilhafte Weiterbildungen der Erfindung sind in den abhängigen Ansprüchen geschützt.

### Kurze Beschreibung der Zeichnungen

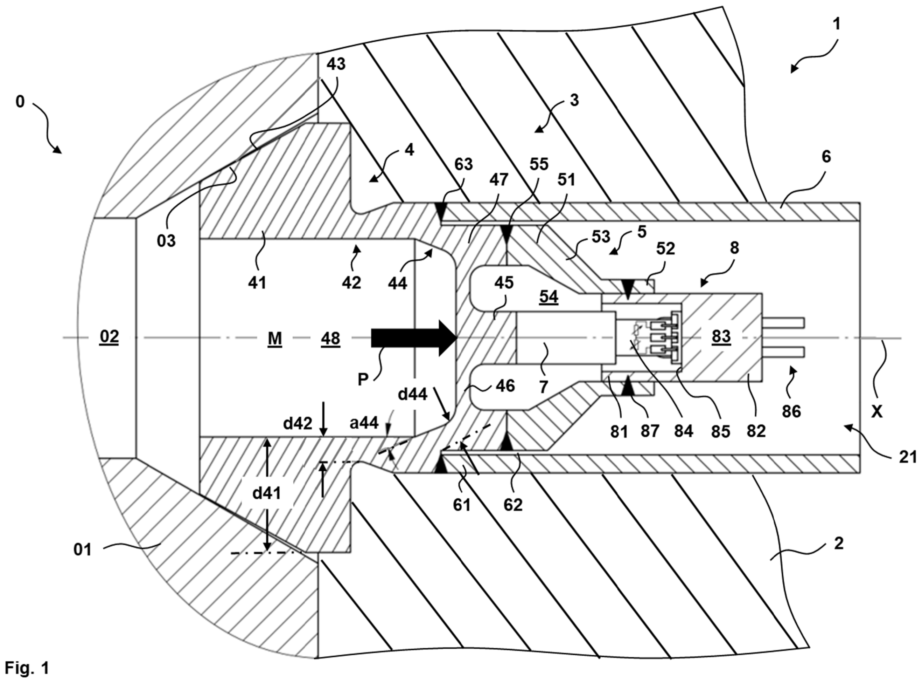

Im Folgenden wird die Erfindung beispielhaft unter Beizug der einzigen Fig. 1 näher erklärt.

### Wege zur Ausführung der Erfindung

Die Fig. 1 zeigt einen Querschnitt durch einen Teil eines erfindungsgemässen Drucksensors 1 zur Messung eines Drucks P. Der Querschnitt erfolgt entlang einer Längsachse X des Drucksensors 1. Nachfolgend wird eine Richtung parallel zur Längsachse X als Längsrichtung bezeichnet. Eine Richtung senkrecht zur Längsachse X wird als Radialrichtung bezeichnet.

Der Drucksensor 1 weist einen Montagekörper 2, ein Gehäuse 3 und eine Messeinheit 8 auf.

### DER DRUCKRAUM 0

Der Druck P stammt von einem Medium M. Gemäss Fig. 1 befindet sich das Medium M in einem Druckraum 0. Der Druckraum 0 weist eine Wandung 01 aus einem widerstandsfähigen, metallischen Material wie ein hochlegierter Edelstahl auf. Die Wandung 01 ist druckdicht. Im Sinne der Erfindung bedeutet das Adjektiv "druckdicht", dass das Medium M nicht durch die Wandung 01 nach ausserhalb des Druckraums 0 entweichen kann. Der Druckraum 0 kann ein Aufbewahrungsbehälter für das Medium M, ein Kompressor für das Medium M, usw. sein.

Das Medium M kann gasförmig und/oder flüssig sein. Das Medium M kann wasserstoffhaltig sein. Im Sinne der Erfindung ist das Medium M wasserstoffhaltig, sobald ein Gehalt an Wasserstoff grösser/gleich 1 Vol% beträgt. Der Druck P ist kleiner/gleich 2500 bar.

Zur Messung des Drucks P weist die Wandung 01 eine Messbohrung 02 auf. Die Messbohrung 02 ist eine Durchgangsöffnung, welche sich in Längsrichtung von innerhalb des Druckraums 0 nach ausserhalb des Druckraums 0 erstreckt.

### DER MONTAGEKÖRPER 2

Der Drucksensor 1 weist einen Montagekörper 2 auf. Der Montagekörper 2 hat die Funktion, den Drucksensor 1 an der Wandung 01 des Druckraums 0 zu montieren.

Der Montagekörper 2 besteht aus einem widerstandsfähigen, metallischen Material wie ein hochlegierter Edelstahl. Der Montagekörper 2 ist hohlzylinderförmig mit einem im Bereich der Längsachse X angeordneten Innenraum 21. Der Montagekörper 2 umgibt den Innenraum 21 in Radialrichtung. Der Montagekörper 2 ist eingerichtet, eine mechanische Verbindung mit der Wandung 01 zu bilden. Vorzugsweise ist die mechanische Verbindung eine Schraubverbindung. In Fig. 1 ist die Schraubverbindung figürlich nicht dargestellt. Vorzugsweise ist der Montagekörper 2 einstückig. Vorzugsweise ist der Montagekörper 2 als Überwurfmutter ausgebildet.

### DAS GEHÄUSE 3

Der Drucksensor 1 weist ein Gehäuse 3 auf. Das Gehäuse 3 besteht ebenfalls aus einem widerstandsfähigen, metallischen Material wie ein hochlegierter Edelstahl.

Das Gehäuse 3 ist im Innenraum 21 des Montagekörpers 2 angeordnet. Durch die Bildung der mechanischen Verbindung des Montagekörpers 2 mit der Wandung 01 wird der Drucksensor 1 an der Wandung 01 des Druckraums 0 montiert.

Das Gehäuse 3 weist ein vorderes Gehäuseteil 4, ein inneres Gehäuseteil 5 und ein äusseres Gehäuseteil 6 auf. Gemäss Fig. 1 ist das vordere Gehäuseteil 4 in Längsrichtung an einem druckraumnahen Ende des Drucksensors 1 angeordnet, während das innere Gehäuseteil 5 und das äussere Gehäuseteil 6 in Längsrichtung an einem druckraumfernen Ende des Drucksensors 1 angeordnet sind.

### DAS VORDERE GEHÄUSETEIL 4

Das vordere Gehäuseteil 4 hat die erste Funktion, die Messbohrung 02 abzudichten. Das vordere Gehäuseteil 4 hat die weitere Funktion, den zu messenden Druck P aufzunehmen und zur Messeinheit 8 abzuleiten.

Das vordere Gehäuseteil 4 ist topfförmig mit einem druckraumnahen Rand des Topfes und einem druckraumfernen Boden des Topfes. Am Rand des Topfes weist das vordere Gehäuseteil 4 einen Frontbereich 41 auf. Am Boden des Topfes weist das vordere Gehäuseteil 4 eine Membraneinheit 45, 46, 47 auf. Das vordere Gehäuseteil 4 ist einstückig. Der Rand des Topfes erstreckt sich über eine Wand des Topfes bis zum Boden des Topfes. Die Wand des Topfes weist mindestens ein Gelenkelement 42, 44 auf. Gemäss Fig. 1 sind die Wand und der Boden des Topfes geschlossen und ohne Öffnung. Einzig der Rand des Topfes weist eine axiale Öffnung auf. Die axiale Öffnung ist ohne Bezugszeichen. Der Rand, die Wand und der Boden des Topfes umschliessen eine Kavität 48 des vorderen Gehäuseteils 4. Im montierten Zustand des Drucksensors 1 ist die Kavität 48 dem Druckraum 0 zugewandt. Im montierten Zustand des Drucksensors 1 ist die Kavität 48 durch die axiale Öffnung in Längsrichtung von der Messbohrung 02 aus zugänglich. Im montierten Zustand des Drucksensors 1 ist die Kavität 48 mit Medium M gefüllt und in der Kavität 48 liegt der Druck P an.

Im montierten Zustand des Drucksensors 1 liegt das vordere Gehäuseteil 4 mit dem Frontbereich 41 an der Wandung 01 an. Der Frontbereich 41 weist in Radialrichtung eine Dicke d41 auf. Der Frontbereich 41 und die Wandung 01 sind so eingerichtet, dass die Anlage über eine sich schräg zur Längsrichtung erstreckende Anlagefläche 43 des Frontbereichs 41 und eine sich schräg zur Längsrichtung erstreckende Anlagefläche 03 der Wandung 01 erfolgt. Vorzugsweise sind die Anlagefläche 43 des Frontbereichs 41 und die Anlagefläche 03 der Wandung 01 bezüglich der Längsrichtung im konstanten radialen Abstand ringförmig um die Messbohrung 02 angeordnet. Gemäss Fig. 1 ist die Anlagefläche 43 des Frontbereichs 41 auf einer von der Kavität 48 abgewandten Seite des vorderen Gehäuseteils 4 angeordnet. Vorzugsweise sind die Anlagefläche 43 des Frontbereichs 41 und die Anlagefläche 03 der Wandung 01 kegelförmig, wobei die Anlagefläche 43 des Frontbereichs 41 einen kleineren Öffnungswinkel als die Anlagefläche 03 der Wandung 01 aufweist.

Die mechanische Verbindung des Montagekörpers 2 mit der Wandung 01 erfolgt über eine Montagekraft. Die Montagekraft bewirkt, dass im montierten Zustand des Drucksensors 1 die Anlagefläche 43 des Frontbereichs 41 ringförmig druckdicht an der Anlagefläche 03 der Wandung 01 anliegt und die Messbohrung 02 gegen ein Entweichen des Mediums M nach ausserhalb des Druckraums 0 abdichtet.

Im montierten Zustand des Drucksensors 1 ragt die Membraneinheit 45, 46, 47 in die Messbohrung 02. Die Membraneinheit 45, 46, 47 des vorderen Gehäuseteils 4 umfasst ein Stempelelement 45, einen elastischen Bereich 46 und einen Randbereich 47. Die Membraneinheit 45, 46, 47 ist einstückig.

Der elastische Bereich 46 ist in Radialrichtung im konstanten Abstand ringförmig um das Stempelelement 45 ausgebildet. Auch der Randbereich 47 ist in Radialrichtung im konstanten Abstand ringförmig um den elastischen Bereich 46 ausgebildet.

Das Stempelelement 45 ist eine Materialverdickung des vorderen Gehäuseteils 4 auf der Längsachse X. Der elastische Bereich 46 ist eine Materialverdünnung des vorderen Gehäuseteils 4. Der Randbereich 47 wiederum ist eine Materialverdickung des vorderen Gehäuseteils 4. Vergleichsweise ist die Dicke des elastischen Bereichs 46 in Längsrichtung um mindestens einen Faktor 2 kleiner als die Dicke des Stempelelements 45 oder die Dicke des Randbereichs 47. Durch die vergleichsweise geringe Dicke weist der elastische Bereich 46 eine niedrigere Steifigkeit als das Stempelelement 45 oder der Randbereich 47 auf.

Die Membraneinheit 45, 46, 47 nimmt den zu messenden Druck P auf. Gemäss Fig. 1 ist der Druck P schematisch als Pfeil dargestellt, welcher entlang der Längsachse X auf das Stempelelement 45 wirkt. Unter der Wirkung des Druckes P ermöglicht der elastische Bereich 46 aufgrund seiner vergleichsweise geringen Dicke eine Auslenkung des Stempelelements 45 in Längsrichtung. Durch diese Auslenkung wird der Druck P abgeleitet. Die Ableitung des Drucks P erfolgt auf der Längsachse X zur Messeinheit 8.

Das Gelenkelement 42, 44 ist bezüglich der Längsrichtung zwischen dem druckraumnahen Frontbereich 41 und der druckraumfernen Membraneinheit 45, 46, 47 angeordnet. Das Gelenkelement 42, 44 ist eine Materialverdünnung des vorderen Gehäuseteils 4. Vorzugsweise umfasst das vordere Gehäuseteil 4 ein erstes Gelenkelement 42 und ein zweites Gelenkelement 44. Das erste Gelenkelement 42 weist in Radialrichtung eine erste Dicke d42 auf. Das zweite Gelenkelement 44 weist in einem Winkel a44 bezüglich der Längsrichtung eine zweite Dicke d44 auf. Vorzugsweise liegt der Winkel a44 im Bereich von 5 ° bis 60 °, vorzugsweise im Bereich von 10 ° bis 45 °, vorzugsweise im Bereich von 15 ° bis 30 °.

Vorzugsweise ist die erste Dicke d42 des ersten Gelenkelements 42 in Radialrichtung um mindestens einen Faktor 2 kleiner als die Dicke d41 des Frontbereichs 41. Vorzugsweise ist die zweite Dicke d44 des zweiten Gelenkelements 44 im Winkel a44 bezüglich der Längsrichtung um mindestens um einen Faktor 2 kleiner als die Dicke des Frontbereichs 41. Vorzugsweise sind die erste Dicke 42 in Radialrichtung und die zweite Dicke 44 im Winkel a44 bezüglich der Längsrichtung weitgehend gleich gross.

Die Steifigkeit des vorderen Gehäuseteils 4 lässt sich über die Dicke des Gelenkelements 42, 44 so einrichten, dass mechanische Spannungen, welche von der mechanischen Verbindung des Montagekörpers 2 mit der Wandung 01 stammen und welche über die druckdichte Anlage des Drucksensors 1 an der Wandung 01 in das vordere Gehäuseteil 4 gelangen, das Gelenkelement 42, 44 gezielt elastisch verformen und sich dabei weitgehend kompensieren. Dadurch wirken die mechanischen Spannungen nur stark abgeschwächt über die Membraneinheit 45, 46, 47 auf die Messeinheit 8 und können so das Messsignal nicht verfälschen. Eine Vergrösserung der ersten Dicke d42 erhöht die Steifigkeit des vorderen Gehäuseteils 4. Eine Verkleinerung des Winkels a44 erniedrigt die Steifigkeit des vorderen Gehäuseteils 4.

### DAS INNERE GEHÄUSETEIL 5

Das innere Gehäuseteil 5 hat die Funktion, die Messeinheit 8 aufzunehmen.

Gemäss Fig. ist das innere Gehäuseteil 5 hohlzylinderförmig. Das innere Gehäuseteil 5 ist auf einer vom Druckraum 0 abgewandten Seite des vorderen Gehäuseteils 4 angeordnet. Das innere Gehäuseteil 5 weist in Längsrichtung ein druckraumnahes inneres Gehäuseende 51 und ein druckraumfernes inneres Gehäuseende 52 auf. Das innere Gehäuseteil 5 weist eine innere Gehäusewandung 53 auf. In Längsrichtung begrenzt das innere Gehäuseteil 5 zwischen dem druckraumnahen inneren Gehäuseende 51 und dem druckraumfernen inneren Gehäuseende 52 einen Hohlraum 54. In Radialrichtung begrenzt das innere Gehäuseteil 5 den Hohlraum 54 mit der inneren Gehäusewandung 53.

Am druckraumnahen Gehäuseende 51 weist das innere Gehäuseteil 1 eine axiale Öffnung auf. Durch die axiale Öffnung ist der Hohlraum 54 in Längsrichtung zugänglich. Die Messeinheit 8 ist im Hohlraum 54 angeordnet.

Ein Aussendurchmesser des inneren Gehäuseteils 5 ist in Radialrichtung weitgehend gleich gross wie ein Aussendurchmesser des Randbereich 47 des vorderen Gehäuseteils 4.

Das innere Gehäuseteil 5 ist mit seinem druckraumnahen inneren Gehäuseende 51 über eine erste stoffschlüssige Verbindung 55 am Randbereich 47 des vorderen Gehäuseteils 4 befestigt. Vorzugsweise ist die erste stoffschlüssige Verbindung 55 als eine die Längsachse X umlaufende Schweissnaht ausgebildet.

Bei Kenntnis der vorliegenden Erfindung kann der Fachmann das vorderen Gehäuseteils 4 und das innere Gehäuseteil 5 auch einstückig fertigen.

### DAS ÄUSSERE GEHÄUSETEIL 6

Das äussere Gehäuseteil 6 hat die Funktion, das innere Gehäuseteil 5 durch einen sich in Längsrichtung erstreckenden Ringspalt 62 vom Montagekörper 2 zu trennen.

Gemäss Fig. 1 ist das äussere Gehäuseteil 6 hohlzylinderförmig. Das äussere Gehäuseteil 6 ist auf einer vom Druckraum 0 abgewandten Seite des vorderen Gehäuseteils 4 angeordnet. Das äussere Gehäuseteil 6 weist in Längsrichtung ein druckraumnahes äusseres Gehäuseende 61 auf. In Radialrichtung ist ein Innendurchmesser des äusseren Gehäuseteils 6 grösser als der Aussendurchmesser des inneren Gehäuseteils 5. Auch ist der Innendurchmesser des äusseren Gehäuseteils 6 in Radialrichtung grösser als der Aussendurchmesser des Randbereichs 47 des vorderen Gehäuseteils 5.

Das äussere Gehäuseteil 6 ist mit seinem druckraumnahen äusseren Gehäuseende 61 über eine zweite stoffschlüssige Verbindung 63 am mindestens einen Gelenkelement 42, 44 des vorderen Gehäuseteils 4 befestigt. Vorzugsweise ist die zweite stoffschlüssige Verbindung 63 als eine die Längsachse X umlaufende Schweissnaht ausgebildet.

Der Aussendurchmesser des inneren Gehäuseteils 5 und der Innendurchmesser des äusseren Gehäuseteils 6 sind eingerichtet, dass nach Bildung der ersten stoffschlüssigen Verbindung 55 und der zweiten stoffschlüssigen Verbindung 63 der sich in Längsrichtung erstreckende Ringspalt 62 ausgebildet ist. Der Ringspalt 62 ist in Radialrichtung zwischen dem Innendurchmesser des äusseren Gehäuseteils 6 und dem Aussendurchmesser des inneren Gehäuseteils 5 ausgebildet. Der Ringspalt 62 verhindert weitgehend, dass im montierten Zustand des Drucksensors 1 mechanische Spannungen, welche von der mechanischen Verbindung des Montagekörpers 2 mit der Wandung 01 stammen, über das äussere Gehäuseteil 6 zur Messeinheit 8 gelangen.

### DAS ÜBERTRAGUNGSELEMENT 7

Der Drucksensor 1 weist eine Übertragungselement 7 auf Das Übertragungselement 7 hat die Funktion, den Druck P vom Stempelelement 45 auf die Messeinheit 8 zu leiten. Auch hat das Übertragungselement 7 die Funktion, Unterschiede bei den Wärmeausdehnungskoeffizienten des Materials vom Gehäuse 3 und von der Messeinheit 8 zu mildern.

Das Übertragungselement 7 ist aus einem widerstandsfähigen, metallischen Werkstoff wie ein hochlegierter Edelstahl, usw. Das Übertragungselement 7 ist zylinderförmig.

Der zu messende Druck P kann lokale Druckspitzen aufweisen, welche Druckspitzen deutlich grösser als der Druck P sind und welche Druckspitzen lokal begrenzt auf das Stempelelement 45 treffen. Um zu vermeiden, dass die Druckspitzen ungehindert vom Stempelelement 45 zur Messeinheit 8 gelangen und dort einen unerwünschten Bruch der Messeinheit 8 verursachen, ist das Übertragungselement 7 im Hohlraum 54 auf der Längsachse X zwischen dem Stempelelement 45 und der Messeinheit 8 angeordnet. Druckspitzen gelangen somit vom Stempelelement 45 in das Übertagungselement 7 und werden über die Länge des Übertragungselementes 7 zur Messeinheit 8 übertragen. Dabei weiten sich die Druckspitzen auf eine unschädliche Grösse auf.

Der Drucksensor 1 ist für den Einsatz bei einer Temperatur von bis zu 350 °C ausgelegt. Bei so hohen Temperaturen führen die Unterschiede beim Wärmeausdehnungskoeffizient des Materials vom Gehäuse 3 und des Materials von der Messeinheit 8 zu einer thermischen Belastung, welche eine unerwünschte Beschädigung des Drucksensors 1 zur Folge haben kann. Um diese thermische Belastung zu mildern, weist das Material des Übertragungselementes 7 einen Wärmeausdehnungskoeffizienten auf, welcher vom Betrag her grösser als der Wärmeausdehnungskoeffizient des Materials vom Gehäuse 3 und als derjenige des Materials von der Messeinheit 8 ist.

### DIE MESSEINHEIT 8

Die Messeinheit 8 hat die Funktion, für den zu messenden Druck P mindestens ein Messsignal zu erzeugen.

Die Messeinheit 8 weist in Längsrichtung ein druckraumnahes Ende 81 und ein druckraumfernes Ende 82 auf.

Die Messeinheit 8 weist eine Traghülse 83 und eine Messschaltung 84 auf.

Gemäss Fig. 1 ist die Traghülse 83 hohlzylinderförmig. Die Traghülse 83 ist aus einem widerstandsfähigen, metallischen Werkstoff wie ein hochlegierter Edelstahl, usw. Vorzugsweise ist die Traghülse 83 einstückig gefertigt.

Die Traghülse 83 hat die Funktion, die Messchaltung 84 zu tragen.

Die Messschaltung 84 kann nach verschiedenen Messprinzipien arbeiten.

Vorzugsweise arbeitet die Messchaltung 84 nach dem piezoresistivem Messprinzip. Dazu weist die Messschaltung 84 einen Tragkörper mit elektrischen Widerstandselementen und Kontaktstellen auf. Die elektrischen Widerstandselemente und die Kontaktstellen sind elektrisch durch elektrische Leitelemente verbunden. Vorzugsweise bildet die Messschaltung 84 eine Wheatstone'sche Brückenschaltung. Vorzugsweise ist der Tragkörper ein SOI (Silicon-On-Insulator). Vorzugsweise weisen die Kontaktstellen der Messschaltung 84 zwei erste Kontaktstellen und zwei zweite Kontaktstellen auf. Bei Anlegen einer Betriebsspannung an die zwei ersten Kontaktstellen bewirkt der auf die Messschaltung 84 eingeleitete Druck P eine Widerstandsänderung, welche Widerstandsänderung an den zwei zweiten Kontaktstellen als Messsignal abgreifbar ist.

Die Messschaltung 84 kann aber auch nach dem piezoelektrischen Messprinzip arbeiten. Dazu weist die Messschaltung 84 piezoelektrisches Material wie SiO₂, GaPO₄, usw. und Elektroden aus elektrisch leitfähigem Material wie hochlegierter Edelstahl, usw. auf. Unter der Wirkung des auf die Messschaltung 84 eingeleiteten Drucks P erzeugt das piezoelektrische Material elektrische Ladungen, welche von den Elektroden als Messignal abgreifbar sind.

Die Traghülse 83 weist einen Auflagerkörper 85 auf. Gemäss Fig. 1 ist der Auflagekörper 85 im Bereich der Längsachse X an der Traghülse 83 angeordnet. Der Tragkörper der Messschaltung 8 liegt am Auflagerkörper 85 an. Unter der Wirkung des auf die Messschaltung 84 geleiteten Drucks P nimmt der Auflagerkörper 85 von der Messchaltung 84 eine Gegenkraft auf.

Die Messeinheit 8 weist an ihrem druckraumfernen Gehäuseende 82 eine Durchführung 86 auf. Die Durchführung 86 weist mehrere Stiftelemente auf. Die Stiftelemente sind aus elektrisch leitfähigem Material wie Kupfer, Silber, Gold, usw. Die Stiftelemente sind ohne Bezugszeichen. Die Durchführung 86 weist ein Isolierelement auf. Das Isolierelement besteht aus elektrisch isolierendem Material wie Aluminiumoxid, Keramik, Saphir, usw.

Die Stiftelemente sind im Isolierelement eingebettet. Über das Isolierelement sind die Stiftelemente am druckraumfernen Gehäuseende 82 in der Traghülse 83 befestigt. Vorzugsweise ist das Isolierelement über eine stoffschlüssige Verbindung wie eine Lötverbindung, usw. in der Traghülse 83 befestigt. Die stoffschlüssige Verbindung ist figürlich nicht dargestellt. Die im Isolierelement eingebetteten Stiftelemente sind somit in der Traghülse 83 befestigt und von der Traghülse 83 elektrisch isoliert.

Die Messeinheit 8 weist Leitungselemente aus elektrisch leitfähigem Material wie Kupfer, Silber, Gold, usw. auf. Die Leitungselemente sind drahtförmig. Die Leitungselemente kontaktieren die Kontaktstellen der Messschaltung 84 elektrisch mit den Stiftelementen der Durchführung 86. Vorzugsweise ist jede der Kontaktstellen der Messschaltung 84 über ein Leitungselement mit genau einem der Stiftelemente der Durchführung 86 elektrisch kontaktiert. Die Leitungselemente sind ohne Bezugszeichen.

Die Messeinheit 8 ist mit der Traghülse 83 über eine dritte stoffschlüssige Verbindung 87 am druckraumfernen Gehäuseende 52 des inneren Gehäuseteils 5 befestigt. Vorzugsweise ist die dritte stoffschlüssige Verbindung 87 der Traghülse 83 am druckraumnahes Ende 81 der Messeinheit 8 angeordnet. Vorzugsweise ist die dritte stoffschlüssige Verbindung 87 als eine die Längsachse X umlaufende Schweissnaht ausgebildet.

Gemäss Fig. 1 ist die dritte stoffschlüssige Verbindung 87 derart eingerichtet, dass das Übertragungselement 7 und die Messschaltung 84 auf der Längsachse X zwischen der Stempeleinheit 45 des vorderen Gehäuseteils 4 und dem Auflagerkörper 85 der Messeinheit 8 mechanisch eingespannt sind.

### Bezugszeichenliste

- 0: Druckraum
- 01: Wandung
- 02: Messbohrung
- 1: Drucksensor
- 2: Montagekörper
- 21: Innenraum
- 3: Gehäuse
- 4: vorderes Gehäuseteil
- 41: Frontbereich
- d41: Dicke
- 42: erstes Gelenkelement
- d42: Dicke
- 43: Dichtfläche
- 44: zweites Gelenkelement
- a44: Winkel
- d44: Dicke
- 45: Stempelelement
- 46: elastischer Bereich
- 47: Randbereich
- 48: Kavität
- 5: inneres Gehäuseteil
- 51: druckraumnahes inneres Gehäuseende
- 52: druckraumfernes inneres Gehäuseende
- 53: Gehäusewandung
- 54: Hohlraum
- 55: zweite stoffschlüssige Verbindung
- 6: äusseres Gehäuseteil
- 61: druckraumnahes äusseres Gehäuseende
- 62: Ringspalt
- 63: zweite stoffschlüssige Verbindung
- 7: Übertragungselement
- 8: Messeinheit
- 81: druckraumnahes Ende
- 82: druckraumfernes Ende
- 83: Traghülse
- 84: Messschaltung
- 85: Auflagerkörper
- 86: Durchführung
- 87: dritte stoffschlüssige Verbindung
- M: Medium
- P: Druck
- X: Längsachse

## Patentansprüche

1. Drucksensor (1) zur Messung des Drucks (P) eines Mediums (M) in einem Druckraum (0), welcher Druckraum (0) eine Wandung (01) und eine Messbohrung (02) aufweist, welcher Druck (P) in der Messbohrung (02) anliegt; mit einem Montagekörper (2), einem vorderen Gehäuseteil (4) und einer Messeinheit (8); welcher Montagekörper (2) eingerichtet ist, den Drucksensor (1) an der Wandung (01) des Druckraums (0) zu montieren; welches vordere Gehäuseteil (4) bezüglich einer Längsrichtung des Drucksensors (1) einen druckraumnahen Frontbereich (41) und eine druckraumferne Membraneinheit (45, 46, 47) aufweist; wobei im montierten Zustand des Drucksensors (1) der Frontbereich (41) druckdicht an der Wandung (01) anliegt und die Membraneinheit (45, 46, 47) in die Messbohrung (02) ragt; welche Membraneinheit (45, 46, 47) eingerichtet ist, den zu messenden Druck (P) aufzunehmen und zur Messeinheit (8) abzuleiten; und welche Messeinheit (8) eingerichtet ist, unter der Wirkung des Drucks (P) mindestens ein Messsignal zu erzeugen; **dadurch gekennzeichnet, dass** das vordere Gehäuseteil (4) mindestens ein Gelenkelement (42, 44) aufweist; dass das Gelenkelement (42, 44) bezüglich der Längsrichtung des Drucksensors (1) zwischen dem Frontbereich (41) und der Membraneinheit (45, 46, 47) angeordnet ist; und dass eine Dicke (d42, d44) des Gelenkelements (42, 44) um mindestens einen Faktor 2 kleiner als eine Dicke (d41) des Frontbereichs (41) ist.

2. Drucksensor (1) gemäss Anspruch 1, **dadurch gekennzeichnet, dass** mit dem Gelenkelement (42, 44) eine Steifigkeit des vorderen Gehäuseteils (4) so eingerichtet ist, dass mechanische Spannungen, welche im montierten Zustand des Drucksensors (1) über die druckdichte Anlage des Drucksensors (1) an der Wandung (01) in das vordere Gehäuseteil (4) gelangen, das Gelenkelement (42, 44) gezielt elastisch verformen und sich dabei weitgehend kompensieren.

3. Drucksensor (1) gemäss einem der Ansprüche 1 oder 2, **dadurch gekennzeichnet, dass** das Gelenkelement (42, 44) ein erstes Gelenkelement (42) aufweist; und dass das erste Gelenkelement (42) in einer Radialrichtung senkrecht zur Längsrichtung des Drucksensors (1) eine erste Dicke (d42) aufweist.

4. Drucksensor (1) gemäss Anspruch 3, **dadurch gekennzeichnet, dass** eine Vergrösserung der ersten Dicke (d42) die Steifigkeit des vorderen Gehäuseteils (4) erhöht.

5. Drucksensor (1) gemäss einem der Ansprüche 1 bis 4, **dadurch gekennzeichnet, dass** das Gelenkelement (42, 44) ein zweites Gelenkelement (44) aufweist; und dass das zweite Gelenkelement (44) in einem Winkel (a44) bezüglich der Längsrichtung des Drucksensors (1) eine zweite Dicke (d44) aufweist.

6. Drucksensor (1) gemäss Anspruch 5, **dadurch gekennzeichnet, dass** der Winkel (a44) im Bereich von 5 ° bis 60 °, vorzugsweise im Bereich von 10 ° bis 45 °, vorzugsweise im Bereich von 15 ° bis 30 °liegt.

7. Drucksensor (1) gemäss einem der Ansprüche 5 oder 6, **dadurch gekennzeichnet, dass** eine Verkleinerung des Winkels (a44) die Steifigkeit des vorderen Gehäuseteils (4) erniedrigt.

8. Drucksensor (1) gemäss einem der Ansprüche 1 bis 7, **dadurch gekennzeichnet, dass** das vordere Gehäuseteil (4) topfförmig ist; dass der Frontbereich (41) einen Rand des Topfes ausbildet; dass die Membraneinheit (45, 46, 47) einen Boden des Topfes ausbildet; dass das Gelenkelement (42, 44) eine Wand des Topfes ausbildet; und dass der Rand, die Wand und der Boden des Topfes eine Kavität (48) des vorderen Gehäuseteils (4) umschliessen, welche Kavität (48) im montierten Zustand des Drucksensors (1) dem Druckraum (0) zugewandt und von der Messbohrung (02) aus zugänglich ist, welche Kavität (4) mit Medium (M) gefüllt ist und in welcher Kavität (48) der Druck (P) anliegt.

9. Drucksensor (1) gemäss Anspruch 8, **dadurch gekennzeichnet, dass** der Frontbereich (41) des vorderen Gehäuseteils (4) eine sich schräg zur Längsrichtung des Drucksensors (1) erstreckende Anlagefläche (43) aufweist, welche Anlagefläche (43) auf einer von der Kavität (48) abgewandten Seite des vorderen Gehäuseteils (4) angeordnet ist; dass im montierten Zustand des Drucksensors (1) die Wandung (01) des Druckraums (0) eine sich schräg zur Längsrichtung des Drucksensors (1) erstreckende Anlagefläche (03) aufweist; und dass eine Montagekraft ein druckdichtes Anliegen der Anlagefläche (43) des Frontbereichs (41) an der Anlagefläche (03) der Wandung (01) bewirkt.

10. Drucksensor (1) gemäss einem der Ansprüche 1 bis 9, **dadurch gekennzeichnet, dass** die Membraneinheit (45, 46, 47) ein Stempelelement (45), einen elastischen Bereich (46) und einen Randbereich (47) umfasst; dass der elastische Bereich (46) in einer Radialrichtung senkrecht zur Längsrichtung des Drucksensors (1) im konstanten Abstand ringförmig um das Stempelelement (45) ausgebildet ist; dass der Randbereich (47) in einer Radialrichtung senkrecht zur Längsrichtung des Drucksensors (1) im konstanten Abstand ringförmig um den elastischen Bereich (46) ausgebildet ist; dass eine Dicke des elastischen Bereichs (46) in Längsrichtung des Drucksensors (1) um mindestens einen Faktor 2 kleiner als eine Dicke des Stempelelements (45) oder eine Dicke des Randbereichs (47) ist; und dass im montierten Zustand des Drucksensors (1) der Druck (P) den elastischen Bereich (46) aufgrund seiner vergleichsweise geringen Dicke in Längsrichtung des Drucksensors (1) auslenkt.

11. Drucksensor (1) gemäss Anspruch 10, **dadurch gekennzeichnet, dass** der Drucksensor (1) ein inneres Gehäuseteil (5) aufweist; dass das innere Gehäuseteil (5) hohlzylinderförmig ist und einen Aussendurchmesser aufweist; dass im montierten Zustand des Drucksensors (1) das innere Gehäuseteil (5) auf einer vom Druckraum (0) abgewandten Seite des vorderen Gehäuseteils (4) angeordnet ist; und dass das innere Gehäuseteil (5) einen Hohlraum (54) begrenzt, in welchem Hohlraum (54) die Messeinheit (8) angeordnet ist.

12. Drucksensor (1) gemäss Anspruch 11, **dadurch gekennzeichnet, dass** das innere Gehäuseteil (5) ein druckraumnahes inneres Gehäuseende (51) aufweist; und dass das innere Gehäuseteil (5) mit dem inneren Gehäuseende (51) über eine erste stoffschlüssige Verbindung (55) am Randbereich (47) des vorderen Gehäuseteils (4) befestigt ist.

13. Drucksensor (1) gemäss einem der Ansprüche 11 oder 12, **dadurch gekennzeichnet, dass** der Drucksensor (1) ein äusseres Gehäuseteil (6) aufweist, dass das äussere Gehäuseteil (6) hohlzylinderförmig ist und einen Innendurchmesser aufweist; dass im montierten Zustand des Drucksensors (1) das äussere Gehäuseteil (6) auf einer vom Druckraum (0) abgewandten Seite des vorderen Gehäuseteils (4) angeordnet ist; dass in einer Radialrichtung senkrecht zur Längsrichtung des Drucksensors (1) der Innendurchmesser des äusseren Gehäuseteils (6) grösser als der Aussendurchmesser des inneren Gehäuseteils (5) ist; und dass in Radialrichtung zwischen Innendurchmesser des äusseren Gehäuseteils (6) und dem Aussendurchmesser des inneren Gehäuseteils (5) ein Ringspalt (62) ausgebildet ist.

14. Drucksensor (1) gemäss Anspruch 13, **dadurch gekennzeichnet, dass** das äussere Gehäuseteil (6) ein druckraumnahes äusseres Gehäuseende (61) aufweist; und dass das äussere Gehäuseteil (6) mit dem äusseren Gehäuseende (61) über eine zweite stoffschlüssige Verbindung (63) am Gelenkelement (42, 44) des vorderen Gehäuseteils (4) befestigt ist.

15. Drucksensor (1) gemäss einem der Ansprüche 11 bis 14, **dadurch gekennzeichnet, dass** die Messeinheit (8) eine Traghülse (83) und eine Messschaltung (84) aufweist; dass das innere Gehäuseteil (5) ein druckraumfernes inneres Gehäuseende (52) aufweist; und dass die Messeinheit (8) mit der Traghülse (83) über eine dritte stoffschlüssige Verbindung (87) am druckraumfernen Gehäuseende (52) des inneren Gehäuseteils (5) befestigt ist.
